# EUROPEAN PATENT APPLICATION

(11) **EP 1 396 236 A1**
(43) Date of publication of application: **10.03.2004**
(21) Application number: 02425550.7
(22) Date of filing: 06.09.2002
(51) Int. Cl.: A61C 8/00

(54) **A dental implant and relevant kit**

(71) Applicant: Leone S.p.A., 50019 Sesto Fiorentino (Firenze) (IT)
(72) Inventor: Pozzi, Alessandro, 50100 Firenze (IT)
(74) Representative: Martini, Lazzaro

(57) **Abstract**

The invention relates to a dental implant and relevant kit; the dental implant comprises an artificial root or fixture (1) and a stump or abutment (2), the fixture, (1) being externally threaded and internally hollow, to be firmly implanted in the subgingival bony tissue (3) of a dental arch in correspondence of a missing tooth, the stump (2) being apt to be associated with the fixture (1) and providing support for a dental prosthesis (D); the inner cavity (11) of the fixture (1) is of truncated-cone shape, with the major base above and the minor one below, and has a terminal seat (12) having polygonal cross-section; the stump (2) has an upper portion (20) to support the prosthesis (D), and a truncated-cone shank (21) terminating with an appendix (22) of polygonal cross-section, that is, of a shape corresponding to polygonal cross-section of the seat (12) of fixture (1), the cone's semi- angles (δ) of said cavity (11) and said shank (21) being correspondingly equal.

## Description

The present invention refers to a dental implant and relevant kit.

It is known that a dental implant makes for the loss of one or more dental elements.
In general, a dental implant comprises an artificial root or fixture, a stump or abutment, and an element connecting the artificial root to the stump.

The root is implanted in the sub-gingival bony tissue in correspondence of the missing tooth, whereas the stump - after having made to elapse some time from the implantation of the root to allow the correct development of a process of osteo-integration, thereby the root results integrated afterwards in the bony tissue - is connected with the root so as to result partially outside the gum and carry out a support function for a dental prosthesis.

Dental implants are known in which the coupling between the artificial root and the stump is provided by a screw axially going through these two elements in order to block one to the other.
This type of coupling is not free from bacterial infiltrations which may cause serious damages to the peri-implant bone and significantly endanger the stability of the implant.

Also known are dental implants in which provision is made for a coupling of cone-metric type between a shank exhibited by the stump and a corresponding seat recess provided in the artificial root. This type of coupling, however, is not able to prevent rotations of the stump relative to the root, with loss of mutual orientation of these two implant's elements and, accordingly, with the possibility of implant's mismatch with respect to the dental structure which is intended for.

The main object of the present invention is to propose a dental implant ensuring a perfect seal of the above mentioned coupling against bacterial infiltration from the outside and, at the same time, making it possible to maintain the stump and artificial root correctly oriented to each other all the time by preventing their relative rotation.

This result has been achieved, according to the invention, by devising an apparatus having the characteristics indicated in the independent claims. Further characteristics being set forth in the dependent claims.

The present invention makes it possible to provide a perfect seal of the above mentioned stump/artificial root coupling against bacterial infiltration from outside and, at the same time, to maintain a correct and desired orientation of the stump with respect to the artificial root once the latter has been positioned in the subgingival bony tissue. In addition, the present implant is well suited for both a direct and indirect prosthetic procedure and, especially as far as the indirect procedure is concerned, offers the significant advantage of allowing an accurate and true reproduction of the correct mutual orientation of fixture and stump, both during the step of preparing the stump at the dental laboratory and upon the final step of positioning the stump within the fixture.

These and further advantages and characteristics of the invention will be best understood by anyone skilled in the art from a reading of the following description in conjunction with the attached drawings given as a practical exemplification of the invention, but not to be considered in a limitative sense, wherein:

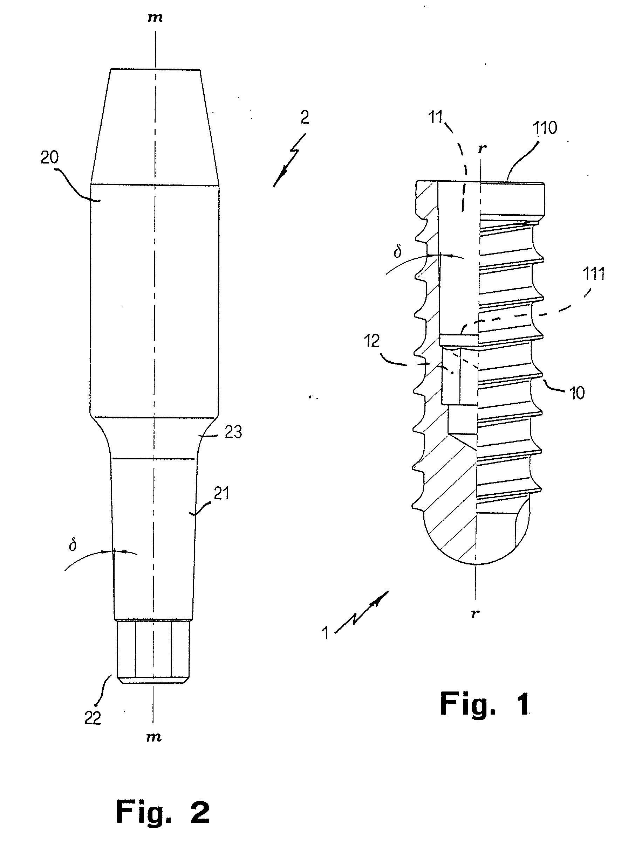

- Fig. 1 is a front elevation view, partially sectioned longitudinally, of an artificial root for a dental implant according to the invention;
- Fig. 2 is a front elevation view of a stump able to be associated with the root of Fig. 1;
- Fig. 3 shows schematically the coupling between the the stump of Fig. 1 and the root of Fig. 2;
- Figs. 4A-4D show in sequence the steps relevant to the positioning of the artificial root in the subgingival bony tissue;

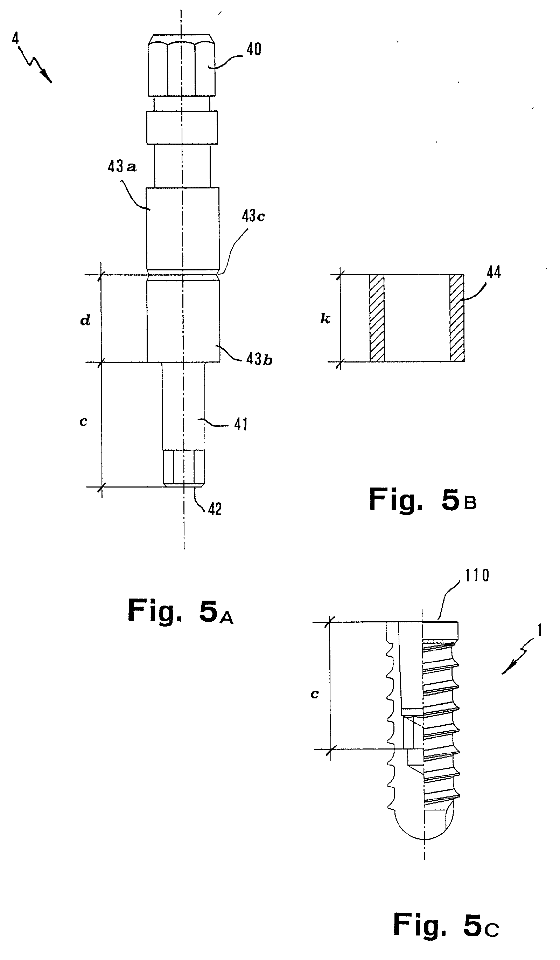

- Figs. 5A, 5B and 5C show separate views of the tool, bush and root, respectively;

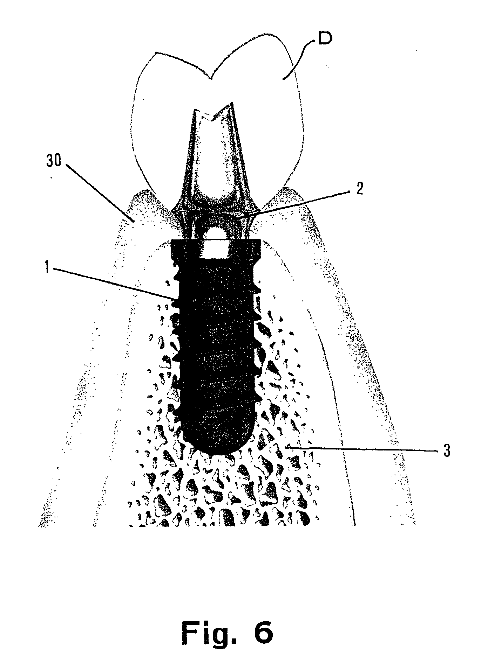

- Fig. 6 is a see-through schematic view of a portion of dental arch provided with implant and prosthesis, according to the invention;
- Figs. 7A and 7B show two further embodiments of the stump;
- Fig. 8 shows a stump for overdenture;
- Fig. 9 shows a so-called transfer element to be used when carrying out the indirect prosthetic procedure;
- Figs. 10-13 show a sequence of steps relative to the positioning and working of the stump upon application of the direct prosthetic procedure; and
- Figs. 14-37 show a sequence of steps concerning the positioning and working of the stump upon application of the indirect prosthetic procedure.

Reduced to its basic structure, and reference being made to the figures and the attached drawings, a dental implant according to the present invention comprises an anchorage or artificial root or fixture (1) and a stump or abutment (2).
The artificial root (1) is intended for being implanted within the subgingival bony tissue (3) in correspondence of a missing tooth.
According to the example represented in the drawings, said root (1) comprises a body with outer thread (10), an inner cavity (11) and a seat (12) of polygonal cross-section - hexagonal for example - in correspondence of the terminal part of said cavity (11). The latter has a truncated cone development, with the major base (110) above and the minor one (111) below. The semi-angle (δ) of the truncated cone has a preset value, for example, a nominal value of 1.5°.
The said stump (2) comprises a body with an upper part being substantially cylindrical (20) and intended to support a dental prosthesis (d), and a truncated-cone shank (21) provided with an appendix (22) of polygonal cross-section, that is, of a shape corresponding to the polygonal cross-section of the seat (2) of fixture (1). The cone's semi-angle (δ) of said shank (21) corresponds to that of the cavity (11) exhibited by the fixture (1).

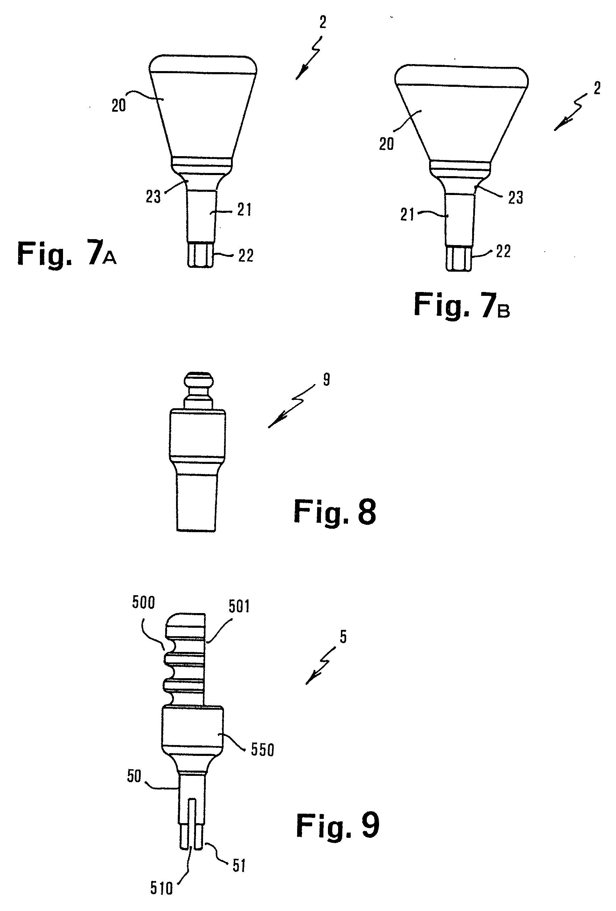

Alternatively, as illustrated in Figs. 7A and 7B, the upper part (20) of the stump may be of substantially truncated-cone shape, instead of cylindrical, to allow fitting therein dental prosthesis of various shapes and dimensions.

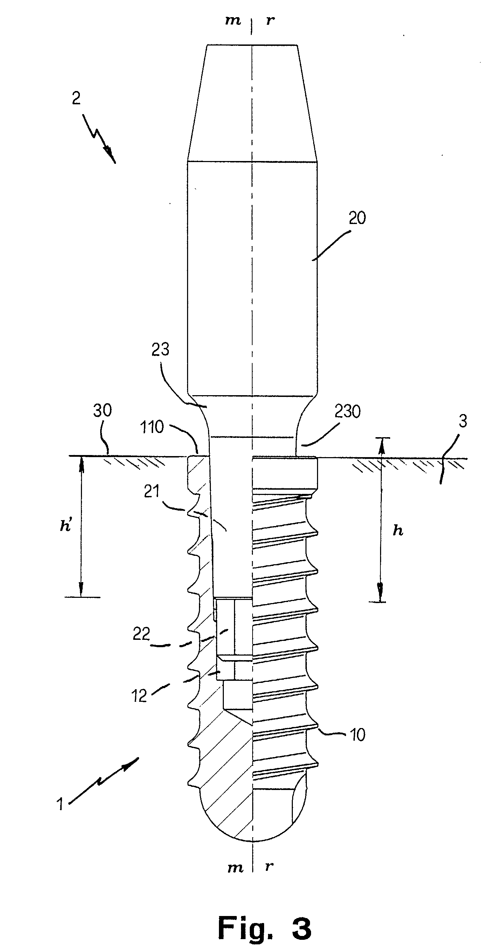

As illustrated in Fig. 3, upon the coupling of stump (2) with the root (1), the respective longitudinal axes (m-m, r-r) coincide.
The truncated-cone shank (21) of stump (2) is, in correspondence of any cross-section thereof, of a diameter less than the cylindrical portion (20) with which is connected without interruption via a connection portion (23) having concave surface, the concavity of said surface being turned outwardly.
The height (h) of said shank (21) may be chosen of a value higher than that of the useful height (h') of the cavity (11) exhibited by the root (1), so that, in the condition of Fig. 3, the gingival tissue's growth results favoured around the stretch between the upper base (110) of root (1) and the lower part (that is, the part interested by the connection 23 and the shank's portion 230 projecting out of the root (1) of stump (2)).
The term useful height (h') of cavity (11) refers to the depth of penetration of the shank (21) therein.
The artificial root (1) can be positioned flush with the crest, as in Fig. 3, that is, positioned either with the upper base (110) at the same level of the gingival crest (30), or below the crest, that is, down at a greater depth, according to the choice made by the doctor.

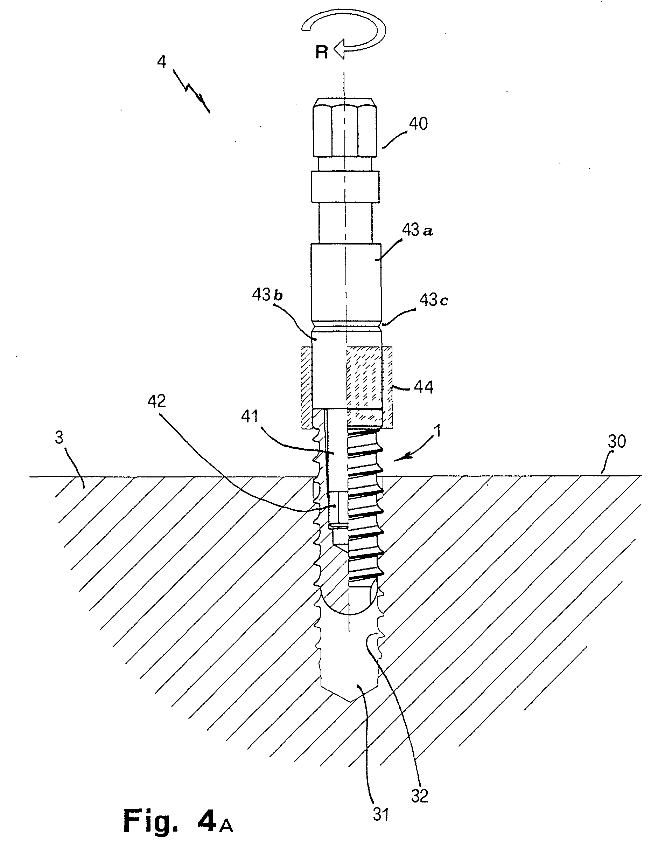

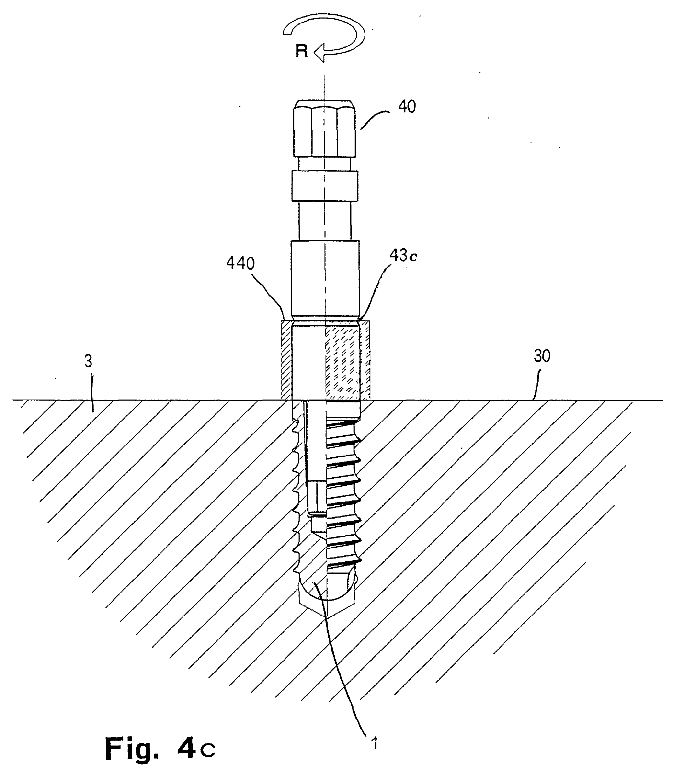

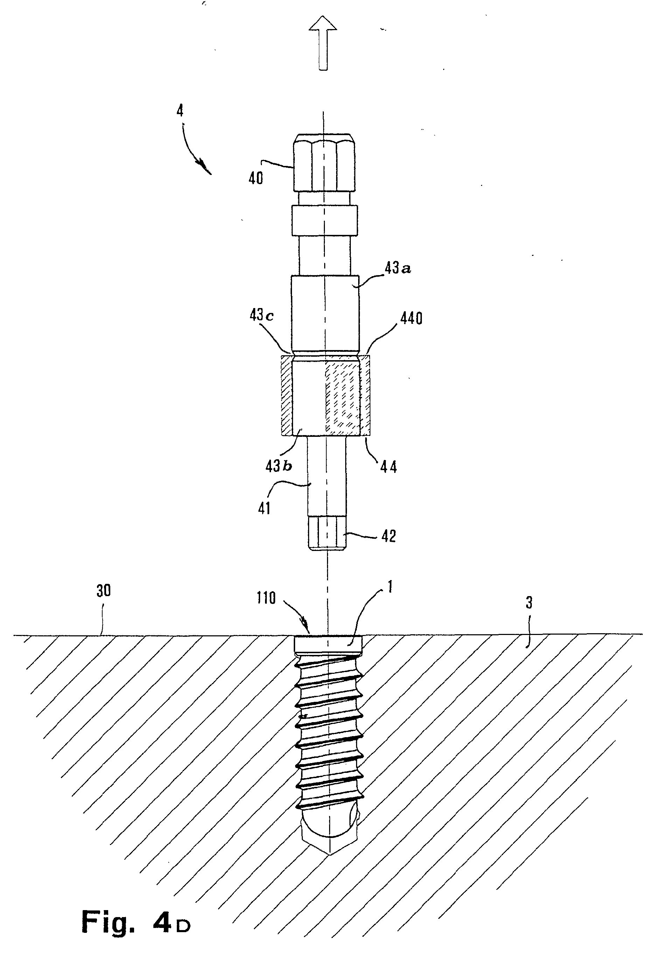

For the positioning of the root (1) at the preset site, the doctor - after having tapped the bone (3), that is, after having drilled a hole (31) and formed a female thread (32) on the wall of the hole, corresponding to the thread (10) exhibited by the root (1) - may use the tool (4) illustrated in Figs. 4A-4D. The said tool comprises an operating upper portion (40) and, on the opposite side, that is, in the lower part, a cylindrical shank (41) with a terminal appendix (42) having polygonal cross-section corresponding to the shape of the seat (12) of root (1). The diameter of said shank (41) is less than the maximum one of the cavity (11) of root (1) (preferably equal to the smallest diameter of such cavity) to allow positioning the respective appendix (42) within the seat (12) of root (1) without interference between the tool's shank (41) and the inner wall of cavity (11).
The tool (4) is also provided with an intermediate portion of cylindrical shape subdivided into two parts (43a, 43b) by a circonferential slot (43c). The whole length (c) of said shank (41) is equal to the full height of cavity (11) formed in the root (1), so that, when the appendix (42) is inserted fully down into the seat (12), the lower edge of the portion (43b) of tool (4) matches the upper base (110) of root (1). Fitted on the intermediate portion of tool (4) is a cylindrical bush (44) intended for visually signalling the depth of insertion of root (1) into the hole (31) formed in the bony tissue (3), as described in more detail later on.

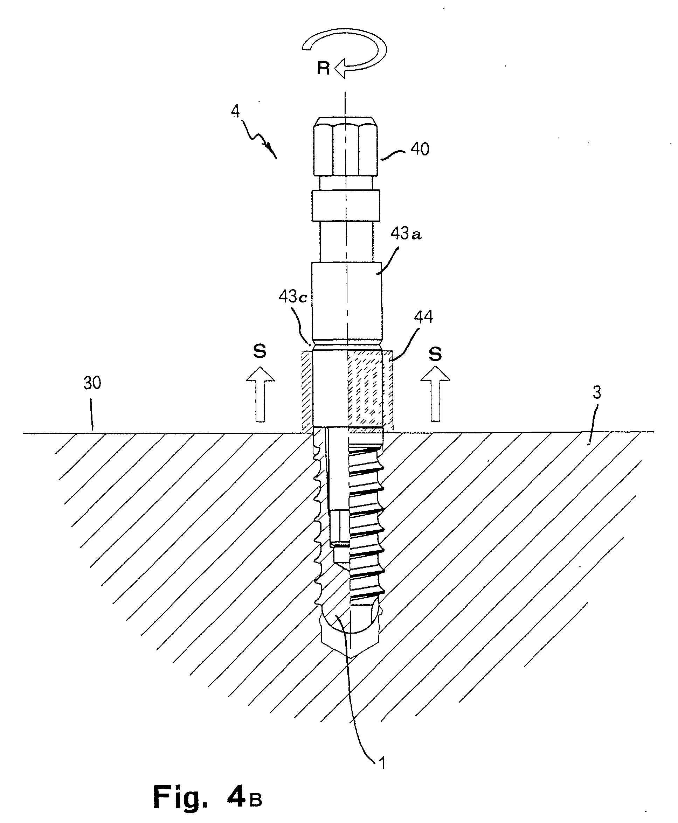

In order to position the artificial root (1) flush with the crest, the same root is located manually in correspondence of the hole (31), with the shank (41) of tool (4) being introduced into the cavity (11) of root (1), so that the polygonal appendix (42) of the tool will result within the seat (12) of root (1). At this point, the tool (4) is driven into rotation, as shown by arrow (R) in Figs. 4A, 4B and 4C, thereby causing the root (1) to be screwed down into the hole (31). As the root (1) goes down into the hole (31), the bush (4A) slides onto the portion (43b) of tool (4) by moving up, as indicated by arrows (S) in Fig. 4B, because of the contact thereof with the bony crest (30). Besides, since the height (k) of bush (44) is equal to the distance (d) between the lower edge of said portion (43b) and the groove of slot (43c), when the root (1) results positioned flush with the crest, the upper edge (440) of bush (44) is correspondingly positioned at the same height of said groove (as shown in Fig. 4C), so that the doctor is visually warned when the root has reached the position in which it is flush with the root (1). At this point, the tool (4) can be withdrawn from the root (1) as illustrated in Fig. 4D. If, on the other hand, it is desired to locate the root (1) more deeply in the hole (31), the tool (4) is made to rotate again to cause the bush (44) to translate further and make its edge (440) pass the groove (43c) of the tool (4) by an extent equal to the distance between the upper base (110) of root (1) and the bony crest (30).

In practice, the bush (44) acts as a mean of measuring the depth of insertion of the root (1) inside the bony tissue (3).

Once the root (1) has been positioned at the desired depth within the bony tissue (30), the doctor can match the stump (2) therein. In order to do so, the doctor will force the shank (21) of stump (2) into the cavity (11), with the polygonal appendix (22) of the stump (2) within the seat (12) of root (1). The interference between the walls of said shank (21) and said cavity (11) ensures a tight seal and the highest stability of the root-stump coupling; and the positioning of said appendix (22) in said seat (12) ensures that no relative rotation between the root (1) and stump (2) will occur following said coupling.

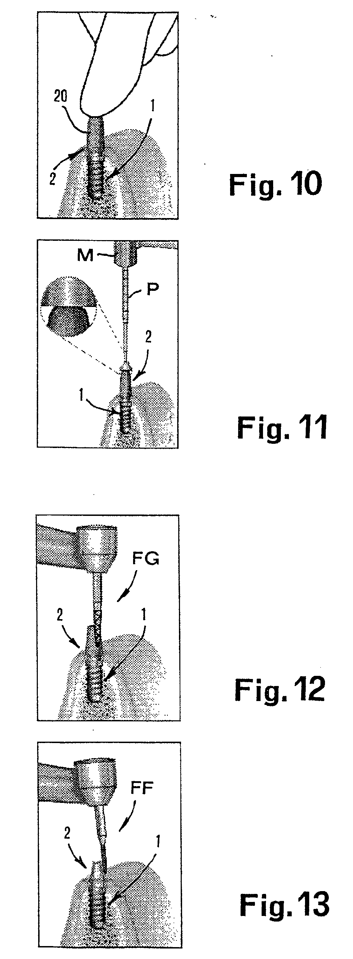

The stump (2) is intended for being stably coupled with the artificial root (1) subsequently to the osteo-integration of the latter.
When applying the so-called "direct" prosthetic procedure, the doctor inserts the stump (2) into the root (1) by causing the stump's shank (22) to engage the polygonal cavity (12) of root (1), and exerts a slight pressure onto the upper part of the stump, as illustrated in Fig. 10.

Afterwards (see Fig. 11), the doctor strikes longitudinally the stump by using a hammer (M) provided with a percussion rod (P). Following this operation, the stump results stably fixed to the artificial root, and the stump's upper part can thus be milled by using different cutters (FG, FF) according to the type of milling to carry out (see Figs. 12 and 13). Finally, the doctor takes an impression of the dental arch interested by the implant, in the same way as when starting from a natural tooth's stump for the preparation of the dental prosthesis on the milled upper part of the stump.

The so-called "indirect" prosthetic procedure implies milling and preparing the stump not inside the mouth, as in the case of the "direct" procedure above described, but at a laboratory. In order to do so, use is made of a so-called "transfer" element (5) which has a spindle (50) with dimensions compatible with the inner cavity of the root (1), but being cylindrical and of smaller diameter to prevent it from fitting stably therein; the terminal part (51) of the spindle (50) is of polygonal shape likewise the stump (2), is provided with a notch (510) and is to be temporary positioned within the inner seat (12) of the root (1), as explained later on. The upper part of transfer (5) exhibits a slotted surface (500) and an opposite smooth surface (501). Between the upper and lower parts of transfer (5) is an intermediate part (550), of substantially cylindrical shape, whose diameter is larger than the maximum inner diameter of cavity (11) exhibited by the fixture (1).

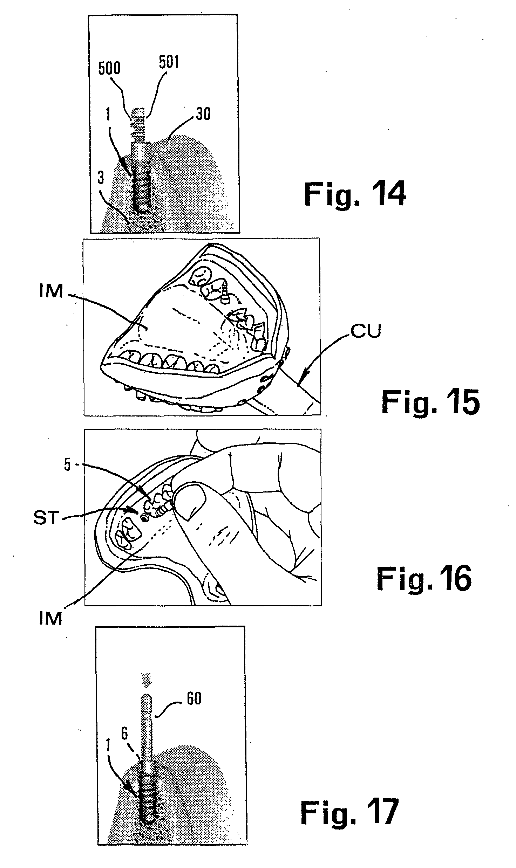

The doctor inserts the transfer (5) into the fixter (1), so as to have the terminal part (51) of the same transfer (5) housed in the polygonal seat (12) of the fixture (1), while the intermediate (550) and upper (500, 501) parts are outside of it (Fig. 14). Afterwards, the doctor takes an impression (IM) of the dental arch (Fig. 15) by using a common spoon (CU) containing a paste for dental impressions.

Upon extracting the spoon (CU) from the patient's mouth, the transfer (5) remains associated with the impression mould (IM) because of the retaining slotted surface (500) thereof. Should the transfer (5) remain associated with the fixture (1), the doctor would extract it manually from the latter to position it, again manually, into the respective seat (ST) generated by the impression (IM) during the previous step (Fig. 16).

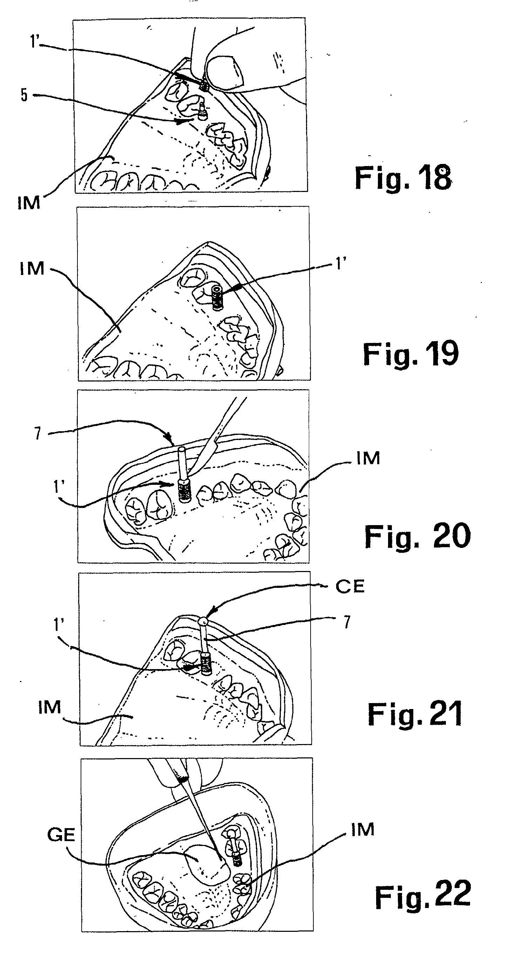

Then, the impression mould (IM) is transferred to the dental laboratory and, in place of the transfer (5), the doctor positions a so-called "recovery plug" (16) for closing the cavity (11) of the artificial root (1). To do so, the doctor makes use of a tool (60) commonly used for this purpose (Fig. 17). Thereafter, a fixture-like piece (1') is positioned onto the transfer (5) which lies on the impression mould (IM), which piece reproduces exactly the shape of fixture (1) but it is perforated and made from a more economical material, as it is not intended for implantation, and is positioned exactly in abutment onto the intermediate part (550) of transfer (5) (see Figs. 18 and 19).
Upon completion of this operation, a pin (7) is positioned into the hole of the fixture-like piece (1') and fixed therein with a little glue wax by using a small spatula (Fig. 20), and then a pallet of wax (CE) is located on the end of the pin (7), as illustrated in Fig. 21, and some plaster (GE) is poured into the impression (IM) which receives the transfer (5), with the fixture-like piece (1') being fitted on the transfer (5) and with the pin (7) inserted into the longitudinal hole of the same fixture-like piece (1') - see Fig. 22.

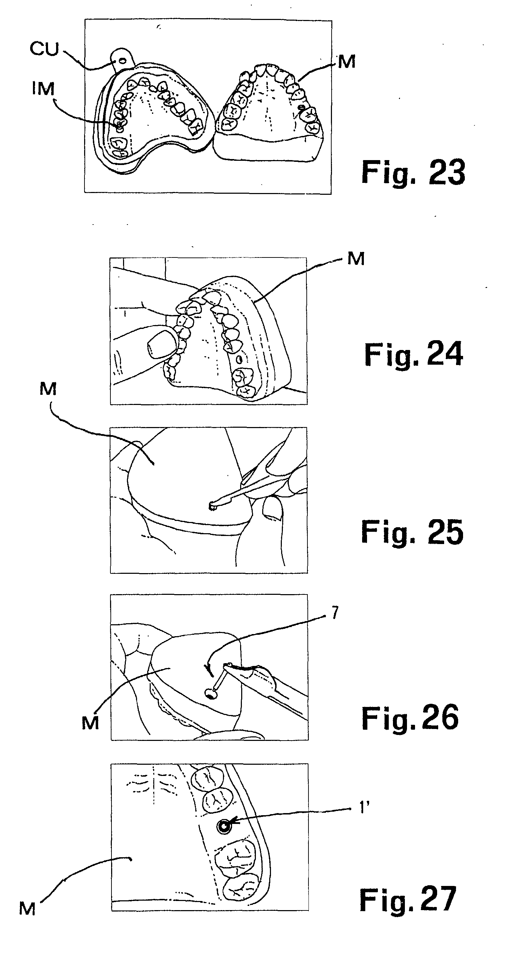

Following the hardening of the plaster, the mould (M) thus obtained is extracted from the spoon (CU) with which the impression mould remains associated - see Fig. 23 - and the same mould (M) is squared until the wax (CE), previously put on the pin (7), results exposed - see Fig. 24.

At this point, by using a sharpened blade or spatula the mould (M) is slightly engraved about the region where the pin (7) is located, as signalled by the pallet of wax (CE), see illustration in Fig. 25, and the pin (7) is taken out from the back of mould (M), possibly using a gripper (Fig. 26). Illustrated in Fig. 27 is the plaster mould (M) with the fixture-like piece (1') which results in the same position taken up by the fixture (1) implanted in the patient's mouth.

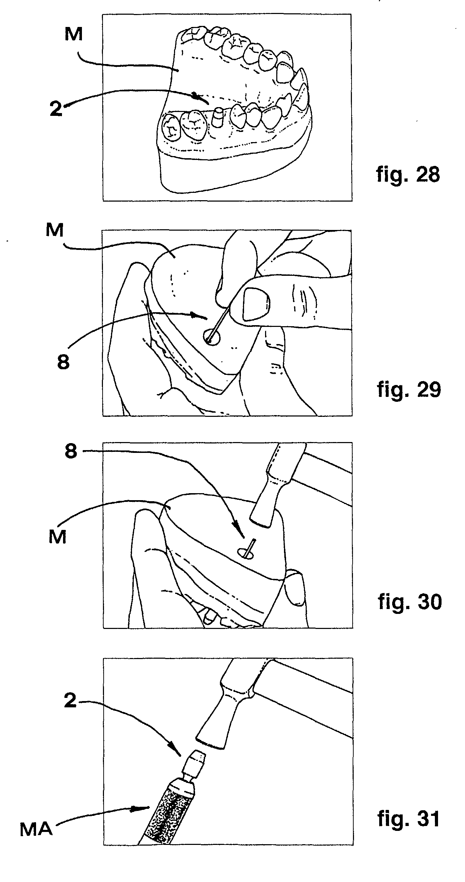

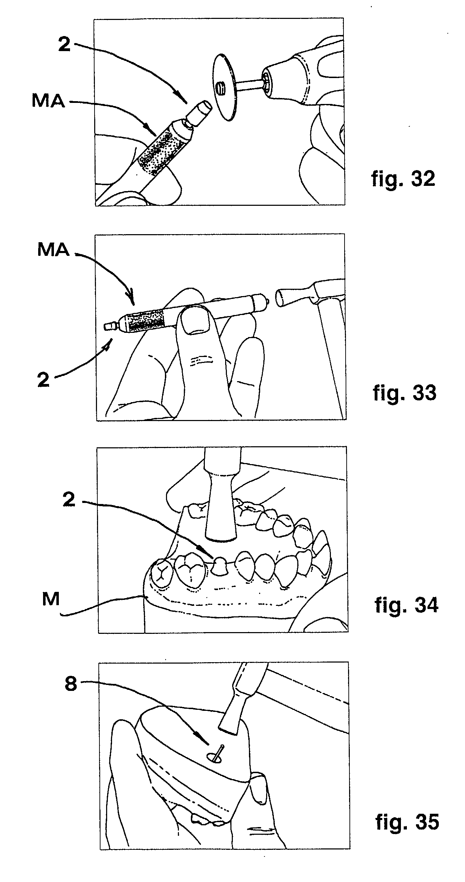

Now, the stump (2) is inserted into the fixture-like piece (1'), with the polygonal end (22) within the corresponding seat of the fixture-like piece (1'), in order to check the dimensional compatibility of these two elements (Fig. 28), after which, as shown in Fig. 29, a needle-shaped extractor (8) is inserted from the back into the mould (M) through the hole resulting from the extraction of the pin (7) from the same mould and, by striking the extractor (8) with a hammer, the stump (2) is disengaged and taken out from the fixture-like piece (1') - see Fig. 30.
At this point, the stump (2) is fixed on a handle (MA) for stumps, see Fig. 31, milled to allow the subsequent positioning of the dental prosthesis (Fig. 32), then extracted from the handle (MA), see Fig. 33, and again positioned into the fixture-like piece (1'), see Fig. 34, to be finished as necessary by using a finishing cutter. Finally, the stump (2) is extracted from the mould (M) by using the needle (8) above mentioned (Fig. 35).

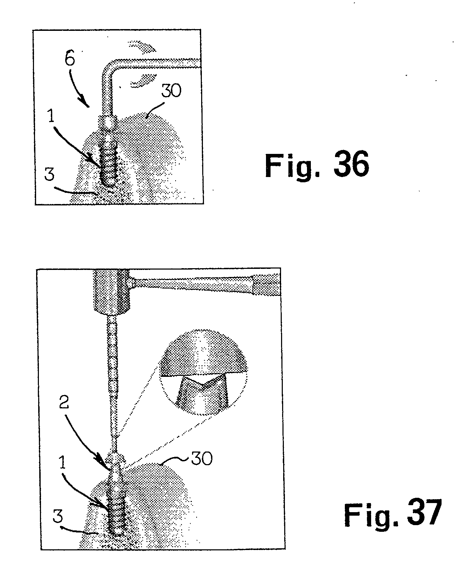

At this point, the stump (2) is ready for the doctor to fit it into the fixture (1): the doctor removes the plug (6) from the fixture (Fig. 36) and, after a suitable washing of the stump (2), inserts the latter into the fixture (1) by striking it with a percussion tool (Fig. 27). The stump (2) is positioned by the doctor into the fixture (1) with the same orientation the same stump (2) exhibited when inserted into the fixture-like piece (1') incorporated in the arch's plaster mould, this condition being greatly favoured by the same polygonal shape of the stump's end (22) and of the seat (12) of fixture (1).
The root can also receive a stump (9) for overdenture known per se.

## Claims

1. Dental implant comprising an artificial root or fixture (1) and a stump or abutment (2), the fixture, (1) being externally threaded and internally hollow, to be firmly implanted in the subgingival bony tissue (3) of a dental arch in correspondence of a missing tooth, the stump (2) to be associated with the fixture (1) and providing support for a dental prosthesis (D), **characterized in that** the inner cavity (11) of the fixture (1) is of truncated-cone shape, with the major base above and the minor one below, and has a terminal seat (12) having polygonal cross-section, and **in that** the stump (2) has an upper portion (20) to support the prosthesis (D), and a truncated-cone shank (21) terminating with an appendix (22) of polygonal cross-section, that is, of a shape corresponding to polygonal cross-section of the seat (12) of fixture (1), the cone's semi- angles (δ) of said cavity (11) and said shank (21) being correspondingly equal.

2. Implant according to claim 1, **characterized in that** the said seat (12) of fixture (1) and the said shank (21) of stump (2) are of hexagonal shape.

3. Implant according to claim 1, **characterized in that** the cone's semi-angle (δ) of said cavity (11) and said shank (21) has a nominal value of 1.5°.

4. Implant according to claim 1, **characterized in that**, on top of said shank (21), the stump (2) exhibits a concave surface (23) whose cavity turns outwards.

5. Implant according to claim 1, **characterized in that** the height (h) of the shank (21) of said stump (2) is greater than the useful height (h') of the cavity (11) exhibited by said fixture (1).

6. Kit comprising an implant with a fixture (1) and a stump (2), according to one or more preceding claims, **characterized in that** it comprises a tool (4) for positioning the fixture (1) within the bony tissue (3), which tools exhibits an operating portion (40) and, on the opposite side, a shank (41) with a terminal appendix (42) having a shape corresponding to the shape of said seat (12) of fixture (1): the said tool (4 being provided with means for measuring the depth of insertion of the fixture (1) into the bony tissue (3).

7. Kit according to claim 6, **characterized in that** the said measurement means comprise a cylindrical bush (44) fitted for sliding onto an intermediate portion (43a, 43b) of the tool (4).
